# EUROPEAN PATENT SPECIFICATION

(11) **EP 3 677 439 B1**
(45) Date of publication and mention of the grant of the patent: **02.11.2022**
(21) Application number: 18856858.8
(22) Date of filing: 03.09.2018
(51) Int. Cl.: B60C 1/00, B60C 15/06, B60C 19/00

(54) **PNEUMATIC TIRE**
LUFTREIFEN
PNEUMATIQUE

(30) Priority: 12.09.2017 JP 2017175250
(43) Date of publication of application: 08.07.2020
(73) Proprietor: Sumitomo Rubber Industries, Ltd., Kobe-shi, Hyogo 651-0072 (JP)
(72) Inventor: YOSHIZUMI, Takuma, Kobe-shi Hyogo 651-0072 (JP); NAKAJIMA, Hiroki, Kobe-shi Hyogo 651-0072 (JP)
(74) Representative: Manitz Finsterwald Patent- und Rechtsanwaltspartnerschaft mbB
(86) International application number: PCT/JP2018/032661
(87) International publication number: WO 2019/054227

(56) References cited:
- WO-A1-2007/100111
- WO-A1-2009/060647
- WO-A1-2016/105929
- WO-A1-2016/105938
- JP-A- H1 142 915
- JP-A- H05 221 207
- JP-A- 2001 525 282
- JP-A- 2006 507 967
- JP-A- 2006 507 967
- JP-A- 2012 240 680
- JP-A- 2015 171 850
- JP-A- 2016 037 236
- KR-A- 20070 022 930

## Description

### TECHNICAL FIELD

The present invention relates to a pneumatic tire in which an electronic component such as RFID is provided.

### BACKGROUND ART

In recent years, in order to monitor various data such as the internal pressure, temperature and rotational speed of pneumatic tires (hereinafter, also simply referred to as "tires") to improve safety, maintainability, etc. while the vehicle is traveling, it has been proposed that an electronic component such as a transponder for RFID (Radio Frequency Identification) (hereinafter, also simply referred to as "RFID") for recording the data is to be provided to a tire.

The transponder is a small, lightweight electronic component consisting of a semiconductor chip with a transmitter/receiver circuit, a control circuit, a memory, etc., and an antenna. As the transponder, Battery-less one is often used which can transmit various data as response radio waves when it receives an inquiry radio wave, which is used as electrical energy.

As a method of providing such an electronic component to a tire, a method has been proposed in which the electronic component is adhered to the surface of the tire after vulcanization by adhesion or the like (for example, Patent Document 1). However, when this method is adopted, there is a problem that the electronic component easily falls-off while traveling on the road surface, although there is little risk that the electronic component will be destroyed.

Then, in order to prevent falling-off of electronic component, a method has been proposed in which the electronic component is integrated with a tire by vulcanization adhesion accompanying vulcanization molding after molding the green tire while embedding the electronic component inside (for example, Patent Document 2).

Patent Document 3 discloses a tire comprising an RFID tag which is installed on a side portion of the tire.

Patent Document 4 discloses a radio frequency antenna for use with a radio device embedded in a tire for operation in a frequency range of at least 130 MHz.

### PRIOR ART DOCUMENTS

### PATENT DOCUMENTS

[Patent document 1] JP2006-168473 A
[Patent document 2] JP2008-265750 A
[Patent document 3] KR 2007 0022930 A
[Patent Document 4] JP 2006 507 967 A

### SUMMARY OF INVENTION

### PROBLEM TO BE SOLVED BY THE INVENTION

However, when a method of integrating an electronic component and an unvulcanized tire by providing the electronic component into the tire is adopted, it is difficult to obtain sufficient reading performance and there is a problem that the durability of the tire decreases, although there is no risk of the electronic component falling-off.

Therefore, an object of the present invention to provide a manufacturing technology for a tire capable of securing sufficient reading performance and preventing decrease in tire durability, even if the tire has an electronic component provided therein.

### MEANS FOR SOLVING THE PROBLEM

The inventors of the present invention have earnestly studied for solving the problem, found that the problem can be solved by the invention by providing a pneumatic tire which has an electronic component provided therein, wherein the electronic component is provided outwards of the carcass in the tire axial direction, and
the rubber member having the largest thickness in the tire axial direction among the rubber members disposed outwards of the electronic component in the tire axial direction contains 20 parts by mass or more of silica with respect to 100 parts by mass of the rubber component, wherein
the rubber member having the largest thickness in the tire axial direction is a clinch.

Preferably, the content of silica of the rubber member having the largest thickness in the tire axial direction is 30 parts by mass or more with respect to 100 parts by mass of the rubber component.

Preferably, the content of silica of the rubber member having the largest thickness in the tire axial direction is 40 parts by mass or more with respect to 100 parts by mass of the rubber component.

Preferably, the electronic component is located outwards of the carcass in the tire axial direction in the cross-sectional view, and is embedded at a position of 20 to 80% from the bottom of bead core with respect to the distance from the position of the maximum tire width to the bottom of bead core in the equatorial direction.

### EFFECT OF THE INVENTION

According to the present invention, a manufacturing technology for tire is provided which secures sufficient reading performance of the tire and does not decrease durability of the tire, even when the tire has an electronic component provided therein.

### BRIEF DESCRIPTION OF DRAWINGS

[Figure 1A] This figure is a cross-sectional view showing a configuration of a pneumatic tire according to an illustrative example for understanding the present invention.
[Figure 1B] This figure is a cross-sectional view showing a configuration of a pneumatic tire according to another embodiment of the present invention.

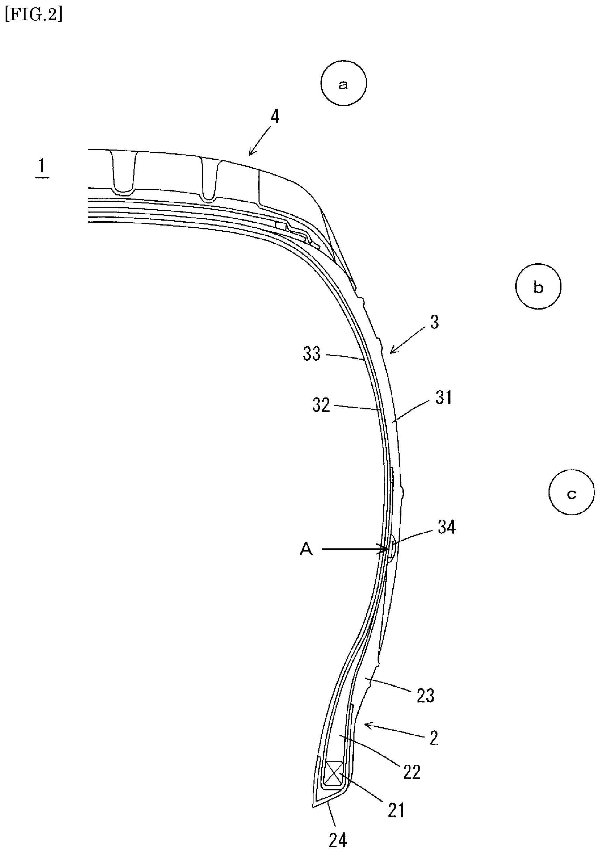

[Figure 2] It is a figure explaining the communication measurement points in the illustrative example.

### EMBODIMENT FOR CARRYING OUT THE INVENTION

Hereinafter, the present invention will be described based on embodiments.

### [1] Background of the Present Invention

In a tire provided with an electronic component, it is preferable to dispose the electronic component outer side of the carcass in the tire axial direction, for example, inside of a layer such as a sidewall or a clinch, in consideration of transmission and reception of data with the electronic component.

However, in the case of the conventional tire, as described above, there is a problem that it is difficult to obtain sufficient reading performance and the durability of the tire decreases.

The inventors of the present invention have considered that the cause of the difficulty in obtaining sufficient reading performance is that carbon is compounded in tire members such as sidewalls and clinch. That is, when carbon is compounded, it was considered that the reading range of the electronic component becomes narrower because the dielectric constant is increased. In addition, when the ozone resistance of these members is low, ozone deterioration occurs to cause surface cracks, and the cracks progress to reach the electronic component provided inside, thereby causing damage to the tire.

Therefore, the inventors of the present invention have considered that silica having no conductivity is compounded as a material for lowering the dielectric constant, in these members. Then, experiments and studies were conducted and it was confirmed that the sufficient reading performance and the durability of the tire can be obtained by compounding silica. Although the details of the mechanism by which such an effect was obtained are unknown, it is guessed as follows.

That is, since the silica does not have conductivity, the rubber composition containing the silica has a reduced dielectric constant. As a result, the reading range of the electronic component is expanded. In addition, since silica has a function of capturing ozone by its hydration water or its functional group on the surface, the rubber composition containing silica improves the ozone resistance and leads to the improvement in the durability of the tire.

It is not necessary to compound silica to all the members for expressing this effect, and it was found to be sufficient that the rubber member having the largest thickness in the tire axial direction, among the rubber members disposed outer side of the electronic component in the tire axial direction, specifically sidewall, clinch, etc., contains 20 parts by mass or more of silica with respect to 100 parts by mass of the rubber component. Thus, the present invention was completed.

### [2] Embodiment of the present invention

### 1. Tire Configuration

### (1) Overall Configuration

As described above, in the tire according to the present embodiment, an electronic component is provided inside, and the rubber member having the largest thickness in the tire axis direction among the rubber members disposed outside of the electronic component in the tire axial direction contains 20 parts by mass or more of silica with respect to 100 parts by mass of the rubber component.

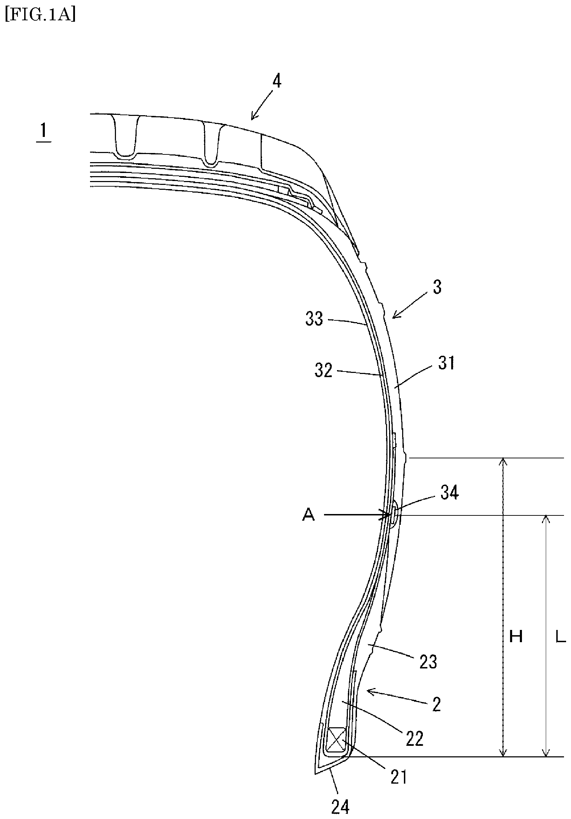

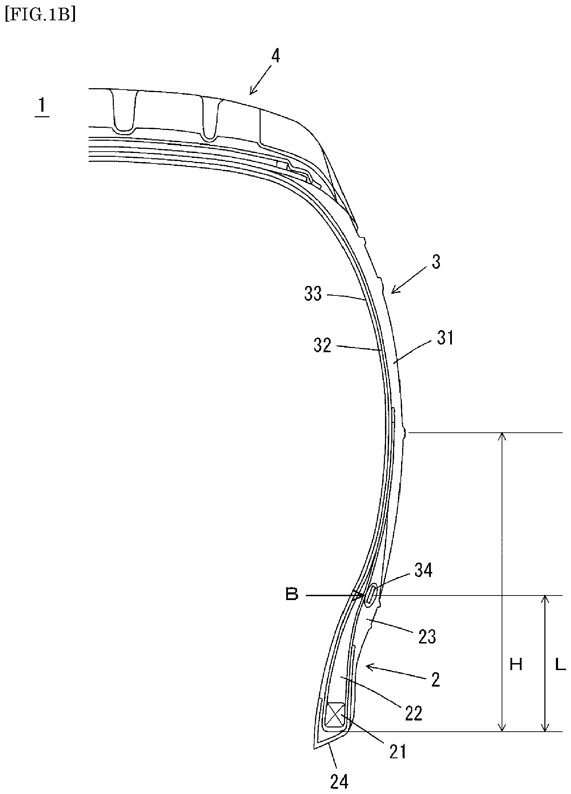

The tire according to the present embodiment will be described with reference to FIG. 1. FIG. 1 is a cross-sectional view showing the configuration of a tire according to an illustrative example (FIG. 1A) and according to an embodiment (FIG.1B) of the present invention. and more specifically, a cross-sectional view of a tire of size 235 / 75R15.

In the case where the rubber member disposed outer side of the electronic component 34 in the tire axial direction and having a largest thickness in the tire axial direction is the sidewall 31, the electronic component is provided at a non-inventive position A as shown in FIG. 1A. On the other hand, when the rubber member disposed outer side of the electronic component 34 in the tire axial direction and having a largest thickness in the tire axial direction is the clinch 23, the electronic component is provided at the position B according to the invention as shown in FIG 1B.

In FIG. 1, 1 is a tire, 2 is a bead portion, 3 is a sidewall portion, 4 is a tread, 21 is a bead core, 22 is a bead apex, and 23 is a clinch member (hereinafter also referred to as "clinch"). In this case, the clinch is an external member located inside a sidewall in a tire radial direction, and located outer side of a bead apex in a tire axial direction. Further, 24 is a chafer, 31 is a sidewall, 32 is a carcass ply (hereinafter also referred to as "carcass"), 33 is an inner liner, and 34 is an electronic component. In this case, in FIG. 1, H is the distance from the position of the maximum tire width to the bottom of the bead core, and L is the distance from the bottom of the bead core of the electronic component 34.

Hereinafter, the sidewall 31 will be described as an example of a rubber member disposed outer side of the electronic component in the tire axial direction and having a largest thickness in the tire axial direction. However, the clinch 23 can be considered similarly.

### (2) Sidewall portion

In this embodiment, the sidewall 31 contains 20 parts by mass or more of silica with respect to 100 parts by mass of the rubber component.

### (a) Configuration

In the present embodiment, the sidewall portion 3 is configured by sequentially stacking the sidewall 31, the carcass 32, and the inner liner 33 from the outer side in the tire axial direction. The electronic component 34 is provided and disposed between the carcass 32 and the sidewall 31.

### (b) Rubber Composition for Sidewall

In the present embodiment, the rubber composition used for producing the sidewall 31 can be obtained by kneading a rubber component as a main component and various compounding materials such as a reinforcing material, an anti-aging agent and an additive, using a rubber kneading apparatus such as an open roll, a banbury mixer or the like.

### (i) Rubber component

As a rubber component, diene rubbers such as natural rubber (NR), isoprene rubber (IR), butadiene rubber (BR), styrene butadiene rubber (SBR), acrylonitrile butadiene rubber (NBR), chloroprene rubber (CR), butyl rubber (IIR), and the like can be mentioned. Combined use of isoprene rubber (NR or IR) and BR is preferable because low fuel consumption and durability can be favorably obtained.

In the isoprene-type rubber (NR or IR), the content is preferably 30 parts by mass or more, and more preferably 40 parts by mass or more in 100 parts by mass of the rubber component. Moreover, it is preferably 60 parts by mass or less, and more preferably 50 parts by mass or less. By setting the content of isoprene-type rubber (NR or IR) in the rubber component in the above range, sufficient breaking elongation and sufficient resistance to bending crack growth can be secured.

In BR, the content is preferably 40 parts by mass or more, and more preferably 50 parts by mass or more in 100 parts by mass of the rubber component. Moreover, it is preferably 70 parts by mass or less, and more preferably 60 parts by mass or less. By setting the content of BR in the rubber component within the above range, sufficient resistance to bending crack growth and sufficient breaking strength can be secured.

In this case, the BR is not particularly limited. For example, BR having a high cis content, BR containing syndiotactic polybutadiene crystals (SPB-containing BR), modified BR, and the like can be used. Among them, SPB-containing BR is preferable from the viewpoint that extrusion processability can be greatly improved by the intrinsic orientation crystal component.

In the combined use of isoprene rubber (NR or IR) and BR, the total content of isoprene rubber (NR or IR) and BR is preferably 80 parts by mass or more, and more preferably 90 parts by mass or more, in 100 parts by mass of the rubber component. By setting the total content of isoprene-based rubber (NR and IR) and BR within the above range, sufficient low fuel consumption and sufficient durability can be secured.

### (ii) Silica

In the present embodiment, silica is further contained as a reinforcing material. As described above, since silica has no conductivity, when it is used as a reinforcing material, the dielectric constant can be lowered and the read range of the electronic component can be expanded. In addition, since hydration water contained in silica and surface functional groups can capture ozone, ozone resistance can be improved, and durability of tire can be improved.

In the present embodiment, the type of silica is not particularly limited. For example, wet silica (hydrous silicic acid), dry silica (anhydrous silicic acid), colloidal silica and the like used in commercially available rubber compositions can be used. Wet silica containing hydration water and containing a large amount of silanol groups is preferable because it can capture ozone effectively.

The content of silica is preferably 20 parts by mass or more, more preferably 30 parts by mass or more, further preferably 40 parts by mass or more with respect to 100 parts by mass of the rubber component, in order to exert the above-described effects sufficiently and exhibit sufficient reinforcement. Considering processability of the rubber composition or the like, the upper limit is preferably about 60 parts by mass.

At this time, in order to improve the dispersibility of the silica as well as to improve the mechanical properties and the moldability by reaction with the silica, it is preferable to additionally contain a silane coupling agent.

Although the silane coupling agent is not specifically limited, examples thereof include a sulfide type, a vinyl type, an amino type, a glycidoxy type, a nitro type and a chloro type silane coupling agent. Among them, a sulfide type silane coupling agent is preferable, and bis (3-triethoxysilylpropyl) tetrasulfide is more preferable, from the viewpoint of excellent dispersibility and low heat generation.

In addition, a small amount, specifically 10 parts by mass or less, of carbon black (CB) may be used in combination to the above-described silica, as the reinforcing material. At this time, as the CB, use a low conductivity FEF or the like is preferable in order to suppress an increase in the dielectric constant of the rubber composition.

### (iii) Vulcanizing agent and vulcanization accelerator

Sulfur is used as a vulcanizing agent, and its content is preferably 1 part by mass or more, and more preferably 2 parts by mass or more with respect to 100 parts by mass of the rubber component. Moreover, it is preferably 8 parts by mass or less, and more preferably 6 mass parts or less. By setting the content of sulfur within the above range, sufficient steering stability can be secured, the bloom and adhesion of sulfur can be suppressed, and the durability can be secured. In this case, content of sulfur is pure sulfur content, and when using insoluble sulfur, it is content except oil content.

Sulfur is usually used together with a vulcanization accelerator. Content of the vulcanization accelerator is preferably 0.5 part by mass or more, and more preferably 1.0 part by mass or more with respect to 100 parts by mass of the rubber component. Moreover, it is preferably 5.0 parts by mass or less, and more preferably 4.0 parts by mass or less. By setting the content of the vulcanization accelerator within the above range, the effects of the present invention tend to be favorably obtained. Specific examples of the vulcanization accelerators include sulfenamide type, thiazole type, thiuram type, thiourea type, guanidine type, dithiocarbamic acid type, aldehyde-amine type, aldehyde-ammonia type, imidazoline type and xanthate type vulcanization accelerators. These vulcanization accelerators may be used alone or in combination of two or more. Among these, sulfenamide-type vulcanization accelerators are preferred because the scorch time and the vulcanization time can be balanced.

When a vulcanization accelerator of a basic substance such as guanidine type or the like is used as the vulcanization accelerator, an effect of promoting the reaction between the above-described silica and a silane coupling agent can be exhibited.

Specific examples of guanidine type include 1,3-diphenylguanidine (DPG), 1,3-di-o-tolyl guanidine, 1-o-tolylbiguanide, di-o-tolyl guanidine salt of dicatechol borate, 1,3-di-o-cumenyl guanidine, 1,3-di-o-biphenyl guanidine, 1,3-di-o-cumenyl-2-propionyl guanidine and the like. Among them, 1,3-diphenylguanidine, 1,3-di-o-tolyl guanidine and 1-o- tolylbiguanide are preferable, and 1,3-diphenylguanidine is more preferable, because of their high reactivity and particularly large effect of promoting the reaction between the silane coupling agent and silica.

### (iv) Stearic acid

As stearic acid, conventionally known products can be used. For example, products produced by NOF Corporation, Kao Corporation, Wako Pure Chemical Industries, Ltd., Chiba Fatty Acid Corporation, etc. can be used. When stearic acid is used, content of stearic acid is preferably 0.5 part by mass or more, and more preferably 1 part by mass or more, with respect to 100 parts by mass of the rubber component. Moreover, it is preferably 10 parts by mass or less, and more preferably 5 parts by mass or less. By setting the content of stearic acid within the above range, the effects of the present invention tend to be obtained well.

### (v) Zinc oxide

As zinc oxide, conventionally known ones can be used. For example, products produced by Mitsui Mining & Smelting Co., Ltd., Toho Zinc Co., Ltd., Hax I Tech Co., Ltd., Shodo Chemical Industry Co., Ltd., etc. can be used. When using zinc oxide, content of zinc oxide is preferably 0.5 part by mass or more, and more preferably 1 part by mass or more with respect to 100 parts by mass of the rubber component. Moreover, it is preferably 10 parts by mass or less, and more preferably 5 parts by mass or less. By setting the content of zinc oxide within the above range, the effects of the present invention tend to be obtained better.

### (vi) Anti-aging agent

As the anti-aging agent, an amine-type anti-aging agent having an excellent ozone resistance effect is preferable. The amine-type anti-aging agent is not particularly limited, and examples thereof include amine derivatives such as diphenylamine-type, p-phenylenediamine-type, naphthylamine-type and ketone amine condensate-type ones. These may be used alone, and two or more may be used in combination. Examples of diphenylamine type derivatives include p-(p-toluenesulfonylamide) -diphenylamine, octylated diphenylamine, 4,4'-bis (α, α'-dimethylbenzyl) diphenylamine and the like. Examples of p-phenylenediamine type derivatives include N- (1,3-dimethylbutyl) -N'-phenyl-p-phenylenediamine (6PPD), N-phenyl-N'-isopropyl-p-phenylenediamine (IPPD) and N, N'-di-2-naphthyl-p-phenylenediamine. Examples of the naphthylamine type derivatives include phenyl-α-naphthylamine and the like. Among them, phenylenediamine type and ketone amine condensate type are preferable. Content of the anti-aging agent is preferably 0.3 part by mass or more, and more preferably 0.5 part by mass or more with respect to 100 parts by mass of the rubber component. Moreover, it is preferably 8 parts by mass or less, and more preferably 2.5 parts by mass or less.

### (vii) Wax

Waxes are not particularly limited, and petroleum waxes such as paraffin wax and microcrystalline wax; natural waxes such as plant wax and animal waxes; synthetic waxes such as polymers of ethylene and propylene etc. can be mentioned as the examples. These may be used alone or in combination of two or more. As specific examples of wax, products manufactured by Ouchi Shinko Chemical Co., Ltd., Nippon Seiro Co., Ltd., Seiko Kagaku Co., Ltd., etc. can be used. When a wax is used, content of the wax is preferably 0.5 part by mass or more, and more preferably 1 part by mass or more with respect to 100 parts by mass of the rubber component. Moreover, it is preferably 10 parts by mass or less, and more preferably 7 parts by mass or less.

### (viii) Oil

Examples of oils include process oils, vegetable oils and fats, and mixtures thereof. As the process oil, for example, paraffin-based process oil, aroma-based process oil, naphthene-based process oil and the like can be used. Examples of vegetable fats and oils include castor oil, cottonseed oil, linseed oil, rapeseed oil, soybean oil, palm oil, peanut oil, rosin, pine oil, pine tar, tall oil, corn oil, rice oil, beni flower oil, sesame oil, olive oil, sunflower oil, palm kernel oil, camellia oil, jojoba oil, macadamia nut oil, tung oil and the like. These may be used alone or in combination of two or more. Specific examples of the oil which can be used include products manufactured by Idemitsu Kosan Co., Ltd., Sankyo Yuka Kogyo Co., Ltd., Japan Energy Co., Ltd., Orisoi Company, H & R Company, Toyokuni Oil Co., Ltd., Showa Shell Co., Ltd., Fuji Kosan Co., Ltd., etc. The content of oil is preferably 0.5 part by mass or more, and more preferably 1 part by mass or more with respect to 100 parts by mass of the rubber component. Moreover, it is preferably 10 parts by mass or less, and more preferably 5 parts by mass or less.

### (ix) Others

In addition to the above components, the rubber composition according to the present embodiment may be compounded materials conventionally used in the rubber industry. For example, an inorganic filler such as talc or calcium carbonate, an organic filler such as cellulose fiber, a softener such as liquid rubber or adhesive resin, a vulcanizing agent other than sulfur, an organic crosslinking agent, or the like may be compounded as required. The compounding quantity of each compounding material can be selected suitably.

### (3) Electronic Component

The tire according to the present embodiment has the electronic component embedded therein. Specific examples of the electronic components include RFID, pressure sensor, temperature sensor, acceleration sensor, magnetic sensor, groove depth sensor, and the like. Above all, RFID is particularly preferable because it can store and read a large volume of non-contact information, so it can store tire manufacturing information, management information, customer information, etc. in addition to data such as pressure and temperature.

In the present embodiment, the electronic component 34 is disposed between the bead apex and the clinch, and outer side of the bead apex in the tire axial direction. It is provided in close proximity to the carcass 32 between the bead reinforcing layer, which suppresses the deformation of the bead apex, and the sidewall (or clinch). As a result, it is possible to suppress the occurrence of local stress concentration and becoming a fracture start point of the carcass. Specific embedding position is not particularly limited as far as reliable information communication is possible and the electronic component is not easily damaged by the deformation of the tire. However, it is preferable to be disposed at a position outer side of the carcass end in the tire axial direction in the cross-sectional view of tire, where the height from the bottom of the bead core (L in FIG. 1) is 20 to 80% with respect to the distance from the position of the maximum tire width to the bottom of the bead core in the equatorial direction (H in FIG. 1), as the position where the damage of the electronic component by the deformation of the tire is relatively small, and communication can be made without problems from the outside when assembled in the rim.

The size (long length including the IC chip and the antenna) of the electronic component to be embedded in the present embodiment is preferably 18 cm or less, more preferably 9 cm or less, further preferably 4 cm or less, and most preferably 2 cm or less. With such a small size, stress may be concentrated on the surrounding rubber, but, since consideration is given to local stress concentration as described above, the durability of the tire can be stably maintained, in the present embodiment. At this time, bending of the antenna portion can be kept to a minimum by arranging the antenna portion of the electronic component to extend in a direction orthogonal to the cord of the carcass.

In addition, the antenna of the RFID is preferably formed of conductive rubber. Since the conductive rubber is flexible, there is no risk of impairing the sidewall or clinch function even if the antenna is enlarged to improve the communication function.

### 2. Manufacture of Tire

The tire of the present embodiment can be manufactured by a usual method except for disposing the electronic component during molding. That is, the sidewall 31 (or clinch 23) is formed by extrusion processing according to the shape of the sidewall (or clinch) at the unvulcanized stage of the rubber composition, then it is pasted together with other tire members to form an unvulcanized tire by a usual method on a tire molding machine. The electronic component is embedded at a predetermined position during the molding.

Thereafter, the unvulcanized tire in which the electronic component is disposed is heated and pressurized in a vulcanizer to manufacture a tire.

### EXAMPLES

### 1 . Compounding materials and Formulation

Table 1 shows the compounding materials. Table 2 shows the formulation.

**[Table 1]**

| Compounding materials | Product Name | Manufacturer |
|---|---|---|
| (Rubber component) | | |
| NR | TSR20 | |
| BR | UBEPOL BR 150B | Ube Industries, Ltd. |

| (Reinforcing material) | | |
|---|---|---|
| Silica | ULTRASIL VN3 | Evonik |
| Carbon Black 1 | SHOWBLACK N550 | Cabot Japan |
| Carbon Black 2 | LIONITE | Lion Specialty Chemicals Co., Ltd. |

| (Silane coupling agent) | | |
|---|---|---|
| Si266 | Si266 | Evonik |
| (Softener) | | |
| Oil | **Diana Process AH-24** | Idemitsu Kosan Co., Ltd. |

| (Anti-aging agent) | | |
|---|---|---|
| Anti-aging agent | NOCLAC 6C | Ouchi Shinko Chemical Co., Ltd. |

| (Vulcanizing agent) | | |
|---|---|---|
| Sulfur | Insoluble Sulfur | Tsurumi Chemical Industry Co., Ltd. |
| Vulcanization Accelerator 1 | SANCELERNS-G | Sanshin Chemical Industry Co., Ltd. |
| Vulcanization Accelerator 2 | SOXINOL D-G | Sumitomo Clemical Co., Ltd. |

| (Others) | | |
|---|---|---|
| Stearic acid | Camellia oil | NOF CORPORATION |
| Zinc oxide | Zinc Flower 1 | Mitsui Mining & Smelting Co., Ltd. |
| Wax | SANNOC N | Ouchi Shinko Chemical Co., Ltd. |

**[Table 2]**

| Formulation No. | | 1 | 2 | 3 | 4 | 5 | 6 | 7 |
|---|---|---|---|---|---|---|---|---|
| F O R M U L A T I O N | NR | 50 | 50 | 50 | 50 | 50 | 50 | 50 |
| | BR | 50 | 50 | 50 | 50 | 50 | 50 | 50 |
| | Carbon Black 1 | 5 | 10 | 10 | 10 | 20 | - | - |
| | Carbon Black 2 | - | - | - | - | - | 65 | 40 |
| | Silica | 40 | 40 | 30 | 20 | 10 | - | - |
| | Coupling agent | 4 | 2 | 2 | 2 | 1 | - | - |
| | Oil | 5 | 5 | 5 | 5 | 5 | 5 | 5 |
| | Wax | 1 | 1 | 1 | 1 | 1 | 2 | 2 |
| | Anti-aging agent | 3 | 3 | 3 | 3 | 3 | 3 | 3 |
| | Stearic acid | 2 | 2 | 2 | 2 | 2 | 2 | 2 |
| | Zinc oxide | 3 | 3 | 3 | 3 | 3 | 3 | 3 |
| | Sulfur | 2.5 | 2.5 | 2.5 | 2.5 | 2.5 | 2.5 | 2.5 |
| | Vulcanization accelerator2 | 1.0 | 0.5 | 0.5 | 0.5 | 0.5 | - | - |
| | Vulcanization accelerator 1 | 3.0 | 1.0 | 1.0 | 1.0 | 0.8 | 3.0 | 1.0 |

### 2. Preparation of pneumatic tire

Based on Table 1 and Table 2, using a banbury mixer manufactured by Kobe Steel, Ltd., compounding materials other than sulfur and a vulcanization accelerator are kneaded, then, to the kneaded product obtained, sulfur and vulcanization acceleration are added and kneaded using an open roll to obtain an unvulcanized rubber composition for sidewall (or clinch).

Moreover, according to Example 1 of JP 2013-245339 A, a rubber composition for coating electronic component 34 can be obtained.

Then, the obtained unvulcanized rubber composition is molded into a sidewall (or clinch) shape, and is laminated and pasted together with other tire members on a tire forming machine. And, the electronic component 34 coated by the unvulcanized rubber composition is provided at a position A shown in FIG. 1A described later, specifically at a position 80% from the bottom of the bead core, in the case of sidewall, or at a position B shown in FIG. 1B, specifically at a position 45% from the bottom of the bead core, in the case of clinch, followed by conducting vulcanization at 150 °C for 30 minutes to obtain a test tire (tire size: 205/65 R16). The above values for position are values with respect to the distance from the position of the maximum tire width to the bottom of the bead core. As the electronic component 34, an RFID in which a 30 mm antenna is provided on both sides of a 3 mm × 3 mm × 0.4 mm IC chip can be used.

Tables 4 to 6 show the relationship between the formulation of the sidewall (or clinch), the durability of the tire, and the communication performance of the electronic component.

The evaluation of the durability of the above tire is "Y"(acceptable) if it is possible to drive 10,000 km on a general road after exposing the tire to ozone under the conditions shown in Table 3, and "NG"(not acceptable) if it is not possible. As for the driving conditions, the mounting rim is 16 × 6.0, the tire internal pressure is 230 kPa, the test vehicle is a front wheel drive vehicle, the displacement is 2000 cc, and the tire mounting position is all wheels.

**[Table 3]**

| | |
|---|---|
| Ozone concentration | 50pphm |
| Temperature | 40 °C |
| Humidity | 65%RH |
| Exposing time | 168 h |

The evaluation method of communication property is a method where transceivers for the electronic component are installed at three measurement points (a to c) of the circle shown in FIG. 3 and it is judged whether communication of data with the electronic component is possible.

Specifically, the tire is assembled in a rim and mounted in a vehicle for conducting the measurement, and the ratio of (the number of readable positions after the durability evaluation / the number of readable positions before the durability evaluation) is calculated. The evaluation result is "EX"(excellent), if the average value of the four tire is 60% or more; "G"(good), if 50% or more and less than 60%; "Y"(acceptable), if more than 0% and less than 50%; and "NG"(not acceptable), if 0% or readable position before durability evaluation is 0.

**[Table 4]**

| Examples/ Comparative examples | Example 1 | Example 2 | Example 3 | Example 4 | Compar. Example 1 | Compar. Example 2 | Compar. Example 3 |
|---|---|---|---|---|---|---|---|
| Formulation of sidewall | 1 | 2 | 3 | 4 | 5 | 6 | 7 |
| Formulation of clinch | 1 | 1 | 1 | 1 | 1 | 1 | 1 |
| Position of RFID | A | A | A | A | A | A | A |
| Durability of tire | Y | Y | Y | Y | Y | NG | NG |
| Communication performance of electronic component | EX | EX | G | G | NG | - | - |

**[Table 5]**

| Examples/Comparative examples | Example 5 | Example 6 | Example 7 | Example 8 | Compar. Example 4 | Compar. Example 5 | Compar. Example 6 |
|---|---|---|---|---|---|---|---|
| Formulation of sidewall | 1 | 1 | 1 | 1 | 1 | 1 | 1 |
| Formulation of clinch | 1 | 2 | 3 | 4 | 5 | 6 | 7 |
| Position of RFID | B | B | B | B | B | B | B |
| Durability of tire | Y | Y | Y | Y | Y | NG | NG |
| Communication performance of electronic component | EX | EX | EX | EX | NG | - | - |

**[Table 6]**

| Examples/ Comparative examples | Example 9 | Example 10 | Example 11 | Compar. Example 8 | Compar. Example 9 | Compar. Example 10 |
|---|---|---|---|---|---|---|
| Formulation of sidewall | 2 | 3 | 4 | 6 | 4 | 6 |
| Formulation of clinch | 1 | 2 | 5 | 5 | 5 | 5 |
| Position of RFID | B | B | A | A | B | B |
| Durability of tire | Y | Y | Y | NG | NG | NG |
| Communication performance of electronic component | EX | EX | G | - | - | - |

As mentioned above, although the present invention was explained based on an embodiment, the present invention is not limited to the above-mentioned embodiment. Various modifications can be made to the above embodiment within the scope of the present invention as defined by the appended claims.

### DESCRIPTION OF THE REFERENCE SIGNS

- 1: tire
- 2: bead portion
- 3: sidewall portion
- 4: tread
- 21: bead core
- 22: bead apex
- 23: clinch
- 24: chafer
- 31: sidewall
- 32: carcass ply
- 33: inner liner
- 34: electronic component
- A, B: Position of electronic component
- H: Distance from the position of maximum tire width to the bottom of bead core
- L: Distance from the bottom of bead core of electronic component

## Claims

1. A pneumatic tire (1) which has an electronic component (34) provided therein,
wherein the electronic component (34) is provided outwards of the carcass (32) in the tire axial direction, and
the rubber member having the largest thickness in the tire axial direction among the rubber members disposed outwards of the electronic component (34) in the tire axial direction contains 20 parts by mass or more of silica with respect to 100 parts by mass of the rubber component,
**characterized in that**
the rubber member having the largest thickness in the tire axial direction is a clinch (23).

2. The pneumatic tire (1) according to claim 1 wherein
the content of silica of the rubber member having the largest thickness in the tire axial direction is 30 parts by mass or more with respect to 100 parts by mass of the rubber component.

3. The pneumatic tire (1) according to claim 2 wherein
the content of silica of the rubber member having the largest thickness in the tire axial direction is 40 parts by mass or more with respect to 100 parts by mass of the rubber component.

4. The pneumatic tire (1) according to any one of claims 1 to 3, wherein
the electronic component (34) is located outwards of the carcass (32) in the tire axial direction in the cross-sectional view, and is embedded at a position of 20 to 80% from the bottom of bead core (21, L) with respect to the distance from the position of the maximum tire width to the bottom of bead core (21) in the equatorial direction (H).

## Patentansprüche

1. Luftreifen (1), in dem eine elektronische Komponente (34) vorgesehen ist,
wobei die elektronische Komponente (34) in der axialen Richtung des Reifens außen von der Karkasse (32) vorgesehen ist, und
das Kautschukelement mit der größten Dicke in der axialen Richtung des Reifens unter den Kautschukelementen, die in der axialen Richtung des Reifens außen von der elektronischen Komponente (34) angeordnet sind, 20 Masseteile oder mehr Silika in Bezug auf 100 Masseteile der Kautschuckomponente enthält,
**dadurch gekennzeichnet, dass**
das Kautschukelement mit der größten Dicke in der axialen Richtung des Reifens ein Clinch (23) ist.

2. Luftreifen (1) nach Anspruch 1, wobei
der Silika-Gehalt des Kautschukelements mit der größten Dicke in der axialen Richtung des Reifens 30 Masseteile oder mehr bezogen auf 100 Masseteile der Kautschukkomponente beträgt.

3. Luftreifen (1) nach Anspruch 2, wobei
der Silika-Gehalt des Kautschukelements mit der größten Dicke in der axialen Richtung des Reifens 40 Masseteile oder mehr bezogen auf 100 Masseteile der Kautschukkomponente beträgt.

4. Luftreifen (1) nach einem der Ansprüche 1 bis 3, wobei
die elektronische Komponente (34) in der axialen Richtung des Reifens in der Querschnittsansicht außen von der Karkasse (32) angeordnet ist und an einer Position von 20 bis 80 % von der Unterseite des Wulstkerns (21, L) in Bezug auf den Abstand (H) von der Position der maximalen Reifenbreite zu der Unterseite des Wulstkerns (21) in der Äquatorialrichtung (H) eingebettet ist.

## Revendications

1. Bandage pneumatique (1) qui a un composant électronique (34) prévu à l'intérieur,
dans lequel le composant électronique (34) est prévu à l'extérieur de la carcasse (32) dans la direction axiale du pneumatique, et
l'élément en caoutchouc ayant la plus grande épaisseur dans la direction axiale du pneumatique parmi les éléments en caoutchouc disposés à l'extérieur du composant électronique (34) dans la direction axiale du pneumatique contient 20 parts en masse ou plus de silice par rapport à 100 parts en masse du composant en caoutchouc,
**caractérisé en ce que**
le composant en caoutchouc ayant la plus grande épaisseur dans la direction axiale du pneumatique est une coiffe de talon (23).

2. Bandage pneumatique (1) selon la revendication 1, dans lequel
la teneur en silice de l'élément en caoutchouc ayant la plus grande épaisseur dans la direction axiale du pneumatique est de 30 parts en masse ou plus par rapport à 100 parts en masse du composant en caoutchouc.

3. Bandage pneumatique (1) selon la revendication 2, dans lequel
la teneur en silice de l'élément en caoutchouc ayant la plus grande épaisseur dans la direction axiale du pneumatique est de 40 parts en masse ou plus par rapport à 100 parts en masse du composant en caoutchouc.

4. Bandage pneumatique (1) selon l'une quelconque des revendications 1 à 3, dans lequel
le composant électronique (34) est situé à l'extérieur de la carcasse (32) dans la direction axiale du pneumatique dans la vue de section transversale, et est encastré à une position de 20 à 80 % depuis le fond d'âme de talon (21, L) par rapport à la distance depuis la position de la largeur de pneumatique maximum jusqu'au fond d'âme de talon (21) dans la direction de l'équateur (H).
